(19) Europäisches Patentamt
European Patent Office
Office européen des brevets

(11) EP 3 792 844 A1

(12) EUROPEAN PATENT APPLICATION

(43) Date of publication:
17.03.2021 Bulletin 2021/11

(51) Int Cl.:
G06Q 10/00 (2012.01)
G06Q 50/30 (2012.01)
G06Q 10/06 (2012.01)

(21) Application number: 20162068.9

(22) Date of filing: 10.03.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 13.09.2019 JP 2019167684

(71) Applicant: Kabushiki Kaisha Toshiba
Minato-ku
Tokyo (JP)

(72) Inventor: OTSUKI, Tomoshi
Tokyo (JP)

(74) Representative: Moreland, David
Marks & Clerk LLP
Aurora
120 Bothwell Street
Glasgow G2 7JS (GB)

(54) **TASK SCHEDULE CREATION APPARATUS, TASK SCHEDULE CREATION METHOD, AND COMPUTER PROGRAM**

(57) According to one approach, a task schedule creation apparatus includes a task schedule creator configured to create a task schedule including a plurality of tasks for a target task based on a first restriction condition concerning a number of times of implementation of a task per unit period and a second restriction condition concerning length of a period between the tasks.

FIG. 1

EP 3 792 844 A1

**Description**

FIELD

Approaches described herein relate to a task schedule creation apparatus, a task schedule creation method, and a computer program.

BACKGROUND

In railroad companies and the like, task scheduling for train vehicles (hereinafter, vehicles) and the like is often manually created. For example, as related art concerning a railroad inspection schedule, there is a method of automatically calculating the next inspection scheduled date of vehicles considering an upper limit of an inspection cycle and an upper limit of a traveling distance. This calculation is performed for each of simple vehicles.

As another related art, there is a method of simultaneously creating an operation schedule and an inspection schedule for vehicles. In this method, first, a cyclic schedule performed for all the vehicles while shifting the same schedule is created. Thereafter, correction of the cyclic schedule is manually performed.

However, different tasks are sometimes set for moving vehicles according to states of the respective moving vehicles. The cyclic schedule cannot satisfy individual restrictions of the moving vehicles.

BRIEF DESCRIPTION OF THE DRAWINGS

FIG. 1 is a block diagram of a task schedule creation apparatus according to an approach;
FIG. 2 is a diagram showing an example of schedule conditions;
FIGS. 3A and 3B are diagrams showing examples of capacity information;
FIG. 4 is a diagram showing an example of cycle information;
FIG. 5 is a diagram showing an example of higher-ranked task information of a task;
FIG. 6 is a diagram showing an example of planned task information;
FIG. 7 is a diagram showing an example of a restriction condition table of an inspection schedule;
FIG. 8 is a diagram schematically showing an example of operation information;
FIG. 9 is a diagram showing a table of an example of a result obtained by calculating an optimum solution or a quasi-optimum solution of a variable;
FIG. 10 is a diagram showing a specific example of a connection restriction;
FIG. 11 is a diagram showing an example in which a set of operations on days indicated by operation information is allocated to vehicles;
FIG. 12 is a diagram showing another example in which the set of the operations on the days indicated by the operation information is allocated to vehicles;
FIG. 13 is a flowchart of an example of the operation of a task schedule creator according to a first approach;
FIG. 14 is a diagram showing an example of capacity information in a second approach;
FIG. 15 is a diagram showing an example of cycle information in the second approach;
FIG. 16 is a diagram showing an example of a restriction condition table for a cleaning schedule;
FIG. 17 is a diagram showing an example of a cleaning schedule created by a task schedule optimizer; and
FIG. 18 is a diagram showing a hardware configuration of the task schedule creation apparatus according to the approach.

DETAILED DESCRIPTION

According to one approach, a task schedule creation apparatus includes a task schedule creator configured to create a task schedule including a plurality of tasks for a target based on a first restriction condition concerning a number of times of implementation of a task per unit period and a second restriction condition concerning length of a period between the tasks.

Approaches of the present invention are explained below with reference to the drawings.

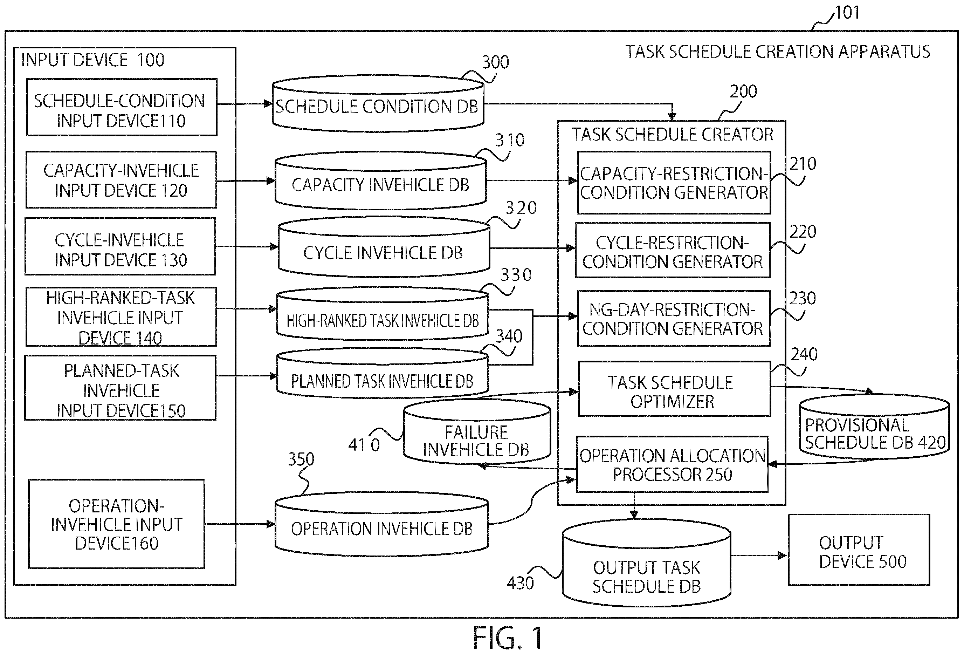

FIG. 1 is a block diagram of a task schedule creation apparatus 101 (hereinafter, the present apparatus 101) according to this approach. The present apparatus 101 creates a task schedule for one or a plurality of targets considering restrictions of the respective targets. In this approach, a moving vehicle, in particular, a railroad vehicle (hereinafter, vehicle) is treated as the target.

An inspection schedule for the vehicle is created as a task schedule for the vehicle. The moving vehicle may be a vehicle such as an automobile or a bus instead of the vehicle. The target may be an apparatus such as a smartphone, a personal computer, or an industrial machine rather than the moving vehicle.

The task schedule creation apparatus 101 shown in FIG. 1 includes an input device 100, a task schedule creator 200, an output device 500, and various databases (DBs) 300 to 350 and 410 to 430.

The input device 100 includes a schedule-condition input device 110, a capacity-information input device 120, a cycle-information input device 130, a higher-ranked-task information input device 140, a planned-task information input device 150, and an operation-information input device 160.

The task schedule creator 200 includes a capacity-restriction-condition generator 210, a cycle-restriction-condition generator 220, an NG-day-restriction-condition generator 230, a task schedule optimizer 240, and an operation allocation processor 250. Schedule conditions

The schedule-condition input device 110 inputs information concerning schedule conditions. The input information concerning the schedule conditions is stored in the schedule condition DB 300.

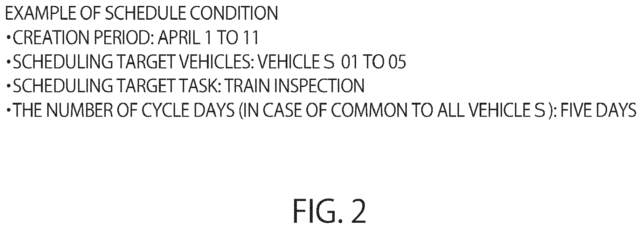

FIG. 2 shows an example of the schedule conditions. The schedule conditions include information concerning: a period of a task schedule creation target (a schedule period), a plurality of vehicles corresponding to scheduled targets, tasks to be scheduled, and the number of cycle days to be scheduled.

In this example, the schedule period is April 1 to April 11. The vehicles of the scheduled targets are five vehicles (01 vehicle to 05 vehicle). A type of the target task is a train inspection (hereinafter, inspection). The number of cycle days is common to the vehicles and is five.

Here, the number of cycle days is an upper limit value of the number of implementation interval days of the inspection. Therefore, an interval of inspections needs to be set to be equal to or smaller than an upper limit value of the length of a period between the inspections. The number of cycle days functions as a cycle restriction condition for the vehicles. As an example, the cycle restriction condition corresponds to a second restriction condition concerning the length of the period between tasks.

In this example, the number of cycle days is common to the vehicles, but the numbers of cycle days are different according to the vehicles. In this case, the number of cycle days for each of the vehicles is defined in cycle information explained below. As an example, the number of cycle days corresponds to a legal inspection cycle for a train inspection. For example, in the case of a legal inspection, there is an upper limit (a legal inspection cycle) of the number of implementation interval days of tasks. An interval of the tasks needs to be set to the legal inspection cycle or less.

Capacity information

The capacity-information input device 120 inputs capacity information. The input capacity information is stored in the capacity information DB 310.

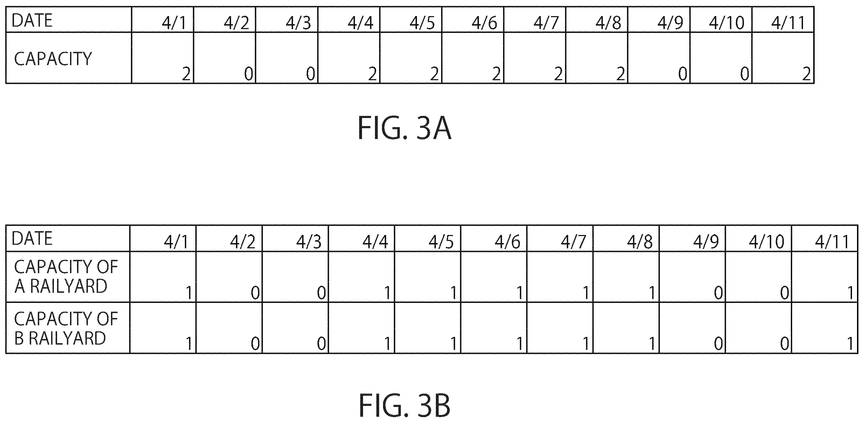

FIG. 3A shows an example of the capacity information. The capacity information includes, for days in a schedule period, a maximum number (a capacity value) of targets which can be performed at most per day. In this example, the capacity value is 2 for the weekdays and is 0 for the holidays. Although the maximum value per day is defined, a maximum value per any unit period (half a day, two days, one week, or the like) may be defined.

FIG. 3B shows another example of the capacity information. When there are a plurality of places where an inspection can be performed, the capacity information includes capacity values of days for each of the places. In this example, there are an A railyard and a B railyard as the places where the inspection can be performed. When there are a plurality of types of inspections, a capacity value may be defined for each of the types of the inspections. A capacity value may be defined for each of combinations of the places and the types.

Cycle information

The cycle-information input device 130 inputs cycle information of inspections of the vehicles (vehicles). The input cycle information is stored in a cycle information DB 320.

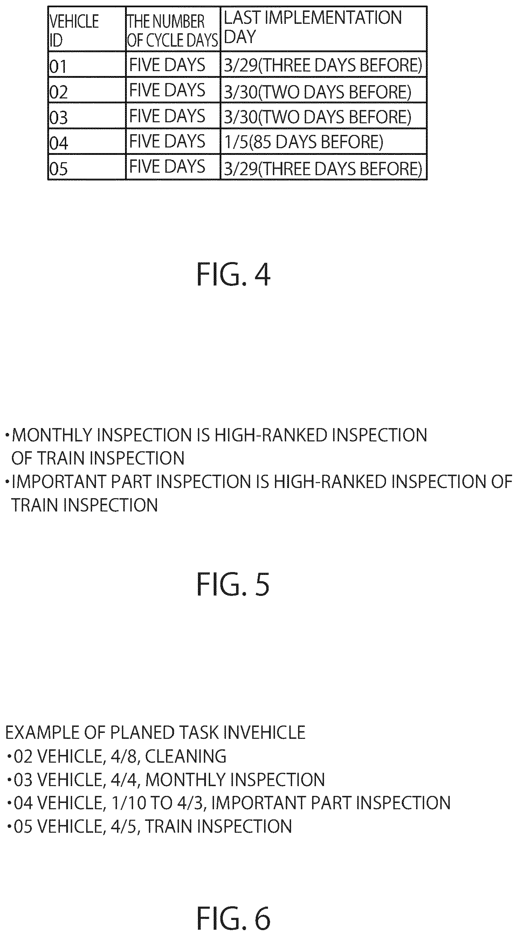

FIG. 4 shows an example of the cycle information. The cycle information includes, for vehicles, the numbers of cycle days of inspections. The cycle information includes, for the vehicles, information concerning last implementation days of the inspection.

When the number of cycle days is common to the vehicles, the number of cycle days can be given by schedule conditions. However, the number of cycle days can be given by the cycle information irrespective of whether the number of cycle days is common to the vehicles. In the example shown in FIG. 4, the number of cycle days of the vehicles is given by the cycle information. The number of cycle days is the same in all the vehicles and is five.

The last implementation day is an final implementation day of a scheduling target task or its higher-ranked task performed before the first day of the schedule period. A planned day when the higher-ranked task is performed is given in advance. The higher-ranked task is a task including a scheduling target. When the higher-ranked task is performed, it can be considered that the scheduling target inspection is also performed.

The last implementation day may be a date or may be the number of days (a relative number of days) counted back from the first day of the schedule period. In the example shown in FIG. 4, examples in both the cases are shown.

The scheduling target task is sometimes performed for two or more days. In this case, the cycle restriction condition may be determined according to: an interval between the previous implementation day and the last day of a task period of this time. The cycle restriction condition may be determined according to an interval between the previous implementation day and the start day of the task period of this time.

For example, it is assumed that the task of this time is started on April 11 and ended on April 13 and the number of cycle days is five. If the previous implementation day is on or after April 8, since the number of days until April 13 counted from the next day of the previous implementation day is five or less, the cycle restriction condition is satisfied. However, if the previous implementation day or the last day of the previous implementation is on or before April 7, since the number of days until April 13 counted from the next day of the last implementation day is six or more, the cycle restriction condition is not satisfied.

If the next implementation day is on or before April 16, since the number of days until the next implementation day counted from the next day of April 11 is five or less, the cycle restriction condition is satisfied. However, if the next implementation day is on or after April 17, since the number of days until the next implementation day counted from the next day of April 11 is six or more, the cycle restriction condition is not satisfied. Further, when the next task is also performed for a plurality of days, for example, performed from April 15 to April 16, since the number of days until April 16, which is the last day of the next implementation, counted from the next day of April 11 is five or less, the cycle restriction condition is satisfied. However, when the next task is performed from April 15 to April 17, since the number of days until April 17, which is the last day of the next implementation, counted from the next day of April 11 is six or more, the cycle restriction condition is not satisfied.

Higher-ranked task information

The higher-ranked-task information input device 140 inputs information concerning higher-ranked task of the scheduling target task. When the scheduling target task is an inspection, the higher-ranked task is a higher-ranked inspection. The input information is referred to as higher-ranked task information. The input higher-ranked task information is stored in the higher-ranked task information DB 330.

FIG. 5 shows an example of the higher-ranked task information. The higher-ranked task information includes information for identifying the higher-ranked inspection. In this example, information such as "a monthly inspection is a higher-ranked inspection of a train inspection" and "an important part inspection is a higher-ranked inspection of a train inspection" is described. As explained above, when the higher-ranked inspection is set on a certain date (that is, when a planned day is set for the higher-ranked inspection), a scheduling target inspection is regarded as being performed on the day. In other words, if an interval from the higher-ranked inspection to the next inspection is equal to or smaller than the number of cycle days, the cycle restriction condition is satisfied.

Planned task information

The planned-task information input device 150 inputs planned task information (first information) that decides, in advance, days when various tasks are performed. The input planned task information is stored in a planned task information DB 340.

FIG. 6 shows an example of the planned task information. The planned task information is schedule information of tasks (planned tasks), implementation days of which are determined for vehicles. Implementation days of the planned task of the vehicles are included in the planned task information. Types of the planned task include both of the scheduling target task (the train inspection) and a task different from the scheduling target task. Examples of the task different from the scheduling target task include the higher-ranked inspection (the monthly inspection, the important part inspection, and the like) and a task (cleaning and the like) other than the higher-ranked inspection. In an example at the top in FIG. 6, for a 02 vehicle, the cleaning is planned to be performed on April 8. For a 04 vehicle, the important part inspection is planned to be performed for a long period of January 10 to April 3.

The planned task information has two types ; one in which a plan is desired to be kept as much as possible and the other in which the plan is desired to be always kept. In this approach, we deal with the case where the plan is always kept. In this case, a restriction condition (a third restriction condition) is that a task is allocated to a vehicle in a day of the plan.

The higher-ranked inspection is basically fixed task. In the determination of the cycle restriction condition, as explained above, the scheduling target task is regarded as being performed on this day. In other words, the implementation of the higher-ranked task is regarded as implementation of the scheduling target task. Since the higher-ranked inspection is performed in a facility different from a facility of the scheduling target task, the higher-ranked inspection may be excluded from a target of counting of a capacity value. When the higher-ranked inspection is performed in the same facility as the facility of the scheduling target task, the higher-ranked inspection is not excluded from the target of the counting of the capacity value. In this approach, the higher-ranked inspection is excluded from the target of the counting of the capacity value.

It is likely that the other task (cleaning and the like) is performed in a place different from a place of the scheduling target task or it is difficult to perform the task simultaneously with the scheduling target task. Therefore, the following restriction condition may be given to the task. As an example, allocation of the scheduling target task to a date when the other task is performed is disapproved. A rule applied when the other task and the scheduling target task overlap may be defined in advance. A task schedule may be created to satisfy the rule. The restriction condition concerning the other task corresponds to, as an example, a fourth restriction condition for not allocating the scheduling target task to a day or a day and time when the other task is performed.

The information input by the input devices 110 to 150 is used as restriction conditions of an operation performed by the task schedule creator 200.

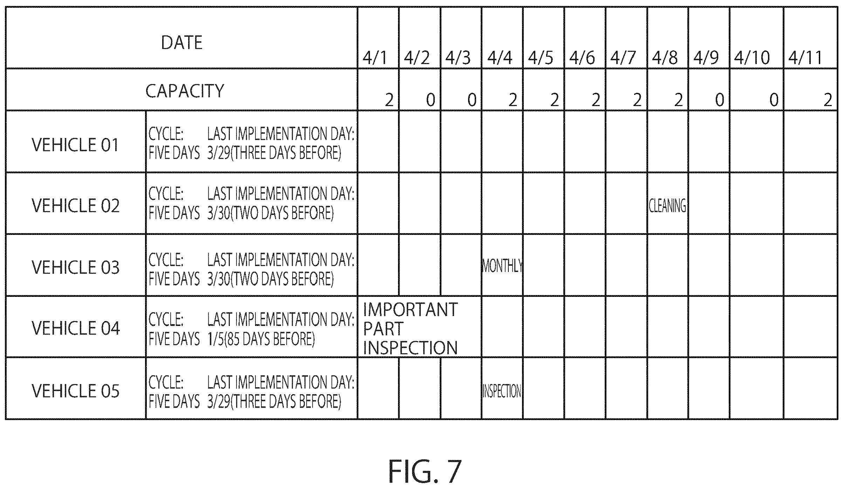

FIG. 7 is a restriction condition table for inspections in which the various kinds of information shown in FIGS. 2 to 6 are collected into one. The restriction condition table includes columns representing dates of schedule periods and rows representing vehicles. Further, the restriction condition table includes a row of capacity. Capacity values on the dates are stored in the row of the capacity. Information for identifying planned task is stored in cells where the columns of the dates and the rows of the vehicles cross. Vehicle IDs, the numbers of cycle days, and last implementation days are stored in the rows of the vehicles.

In this example, a schedule period is April 1 to April 11, scheduling target vehicles are a 01 vehicle to a 05 vehicle, and the numbers of cycle days of the vehicles are five. Capacity values of days are twice for the weekdays and 0 time for the holidays. Last implementation days before April 1 are shown for each of the vehicles. As planned task, a monthly inspection (4/4, the 03 vehicle), an important part inspection (4/1 to 4/3, the 04 vehicle), cleaning (4/8, the 02 vehicle), an inspection (4/5, the 05 vehicle) are registered in advance.

Operation information

The operation-information input device 160 inputs operation information of trains for the days in the scheduling target period. The input operation information is stored in the operation information DB 350.

The operation information includes a set of operations that need to be performed on the days in the scheduling target period. Besides, the operation information may include information concerning places (departure places) of vehicles on the first day of the scheduling target period. The operation information may include information concerning designated operation (explained below) of respective tasks.

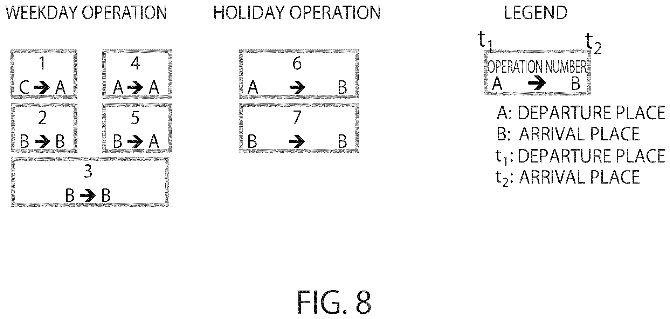

FIG. 8 schematically shows an example of the operation information. Two operations, that is, a weekday operation and a holiday operation are shown. In the scheduling target period, the weekday operation is applied to the weekdays and the holiday operation is applied to the holidays. The weekday operation includes five operations 1 to 5. The holiday operation includes two operations 6 and 7. In the weekdays (Monday to Friday), all of the operations 1 to 5 need to be allocated to scheduling target vehicles (in this example, the 01 vehicle to the 05 vehicle) without overlap. In the holidays (Saturday, Sunday, and national holidays), all the operations 6 and 7 need to be allocated to the vehicles without overlap. The allocation of the operations is performed after the allocation of the scheduling target task (inspection). Note that there may be vehicles to which none of operations are allocated.

In FIG. 8, the operations are represented by rectangles. Numbers in the rectangles are operation numbers. Departure places and arrival places are connected by arrows in the rectangles. The departure places are departure places of trains. The arrival places are arrival places of the trains. For example, in the case of an operation 1 of the weekday operation, the departure place is a place C and the arrival place is a place A. Note that the places A, C, and the like may be stations, may be places (railyards) other than the stations, or may be other places. If the last arrival place is A, the train may pass through a halfway place A or may turn back in the place A. For example, the train may make roundtrips a plurality of times between the place A and the place C and arrive at the last place A.

As shown in a legend, departure times and arrival times of the operations may be added to both ends of the rectangles. In this example, the departure times and the arrival times are omitted for simplification. There are types of a morning operation, an afternoon operation, and a full day operation according to the departure times and the arrival times. A short rectangle corresponds to the morning operation or the afternoon operation. A long rectangle corresponds to the full day operation. As an example, the morning operation is performed from 7:00 to 10:00, the afternoon operation is performed from 15:00 to 19:00, and the full day operation is performed from 5:00 to 24:00. In this example, the morning operation is the operations 1 and 2. The afternoon operation is the operations 4 and 5. The full day operation is the operations 3, 6, and 7. The scheduling target task is performed, for example, at an interval between operations of approximately several hours (between the morning operation and the afternoon operation).

The input devices 110 to 160 are input means such as a keyboard, a mouse, and a touch panel operated by an operator of the present apparatus 101. In this case, the present apparatus 101 includes a function of presenting an interface screen for inputting information. The interface screen is displayed on the output device 500. The input devices 110 to 160 may be acquirer for acquiring information from an external apparatus or a storage medium. In this case, the external apparatus is, as an example, an external server connected to the present apparatus 101 via a wired or wireless communication network. The storage medium is, as an example, a storage medium disposed on the inside of the present apparatus 101 or an externally connected storage medium. Examples of the storage medium include a memory device, a hard disk, an SSD, and an optical disk. A trigger for acquisition of a railroad schedule may be an instruction of the operator of the present apparatus 101 or may be another condition (for example, a predetermined time has come).

The task schedule creator 200 generates a capacity restriction condition, a cycle restriction condition, and an NG day restriction condition respectively as restriction conditions and creates a task schedule (an inspection schedule) as an optimum solution or a quasi-optimum solution under these restriction conditions. The task schedule creator 200 performs, based on the task schedule, allocation of all planned operations to scheduling target vehicles. When all the operations are successfully allocated, the task schedule creator 200 determines that the task schedule is feasible and outputs the task schedule to the output task schedule DB 430 as an output task schedule. When determining that the task schedule is infeasible, the task schedule creator 200 specifies a pair of a date and a vehicle to which an operation is not successfully allocated because an inspection is allocated to the pair and registers the specified pair in failure information (TabuList) as an entry. The task schedule creator 200 performs optimization processing for a task schedule again (recreation of a task schedule) under an additional restriction condition that a task is not allocated to the date and the vehicle registered in the failure information. The task schedule creator 200 recursively repeats the above processing until a task schedule to which all the operations can be allocated is created. The task schedule before being determined as feasible is referred to as provisional task schedule.

The output device 500 reads out the output task schedule from the output task schedule DB 430 and displays the output task schedule on a screen. The user looks at the displayed output task schedule and confirms the task schedule for the vehicles.

The task schedule creator 200 is explained in detail below.

An example of creation of a task schedule is explained using the restriction condition table shown in FIG. 7 as an example. In FIG. 7, the important part inspection and the monthly inspection are a higher-ranked inspection with respect to an inspection. The inspection is regarded as being performed on a pertinent day. Note that when the inspection is continuously performed for a plurality of days like the important part inspection, all the days are regarded as implementation days of the inspection. The inspection cannot be performed on a cleaning implementation day.

The capacity-restriction-condition generator 210 reads out the capacity information from the capacity information DB 310 and converts the read-out information into a form executable in the task schedule optimizer 240. Consequently, a capacity restriction condition can be created in a form executable in the task schedule optimizer 240. The capacity restriction condition corresponds to, as an example, a first restriction condition concerning the number of times of task feasible per unit period.

The cycle-restriction-condition generator 220 reads out the cycle information from the cycle information DB 320 and converts the read-out information into a form executable in the task schedule optimizer 240. Consequently, a cycle restriction condition (a second restriction condition) can be created in a form executable in the task schedule optimizer 240.

The NG-day-restriction-condition generator 230 reads out the higher-ranked task information and the planned task information respectively from the higher-ranked task information DB 330 and the planned task information DB 340 and generates an NG day restriction condition. The NG day restriction condition includes three sets FixSET, UpperSET, and NGSET.

The FixSET is a set for registering a pair of a date and a vehicle for which scheduling target task (inspection) is planned to be performed in advance. The FixSET is created from the information concerning the scheduling target task in the planned task information DB 340. In the example shown in FIG. 7, it is determined in advance that an inspection of the 05 vehicle is performed on April 5. Therefore, the FixSET is generated as follows. The FixSET is used as a restriction condition (a third restriction condition) that decides that a task is allocated to a pair of a date and a vehicle registered in the FixSET.

$$FixSET = \{(05 \text{ vehicle}, 4/5)\} \quad (1)$$

The UpperSET is a set for registering a pair of a date and a vehicle for which higher-ranked task (a higher-ranked inspection) is planned. The UpperSET is created by associating the higher-ranked task information DB 330 and the planned task information DB 340. In this example, the monthly inspection and the important part inspection are set as the higher-ranked task in the higher-ranked task information DB 330. Planned days of the higher-ranked task are set in the planned task information DB 340. Accordingly, the UpperSET is generated as follows:

$$\text{UpperSET}=\{(03 \text{ vehicle}, 4/4), (04 \text{ vehicle}, 4/1), (04 \text{ vehicle},$$
$$4/2), (04 \text{ vehicle}, 4=3)\} \quad (2)$$

The NGSET is a set for registering a pair of a date and a vehicle for which the scheduling target task cannot be performed. The NGSET is created from information concerning task(s) other than the scheduling target task in the planned task information DB 340. The task other than the scheduling target task is the cleaning in the example shown in FIG. 6. Since the cleaning is performed for the 02 vehicle on April 8, an inspection cannot be performed for the 02 vehicle on this day. In this example, the NGSET is created as follows. The NGSET is used as a fourth restriction condition that decides that the scheduling target task is not allocated to a planned day of other task.

$$\text{NGSET}=\{(02 \text{ vehicle}, 4/8)\} \quad (3)$$

Note that when it is allowed to set both of the scheduling target task and a task (for example, cleaning) different from the scheduling target task for a certain day and a certain vehicle, a pair of the vehicle and the date does not need to be registered in the NGSET.

Creation of a task schedule (an inspection schedule) by the task schedule optimizer 240 is explained. Modeling based on the following mathematical model is performed under the restriction conditions obtained above.

[Equation 1]

$$\text{min.} \sum_{d} \sum_{h} x_{d,h} \quad (4)$$

s.t.

$$\sum_{h} x_{d,h} \leq C_d, \qquad \forall d \in D \quad (5)$$

$$x_{d,h} + x_{d+1,h} + \cdots + x_{d+T,h} \geq 1, \quad \forall d \in D, \forall h \in H \quad (6)$$

$$x_{d,h} = 1, \qquad \forall (d,h) \in FixSET \cup UpperSET \quad (7)$$

$$x_{d,h} = 0, \qquad \forall (d,h) \in TabuList \cup NGSET \quad (8)$$

$$x_{d,h} \in \{0,1\}, \qquad \forall d \in D, \forall h \in H \quad (9)$$

Where, the characters are defined as follows:

A set of days {1, 2, ..., D'} ($\equiv$D)
A set of vehicles {1, 2, ..., H'} ($\equiv$H)
A variable $x_{d,h}$: a variable of 0 or 1 indicating whether an inspection is performed in an h vehicle on a d-th day
A constant T: the number of cycle days
A constant $C_d$: a maximum number of times of inspection implementation (a capacity value) on the d-th day
FixSET: A set of pairs of (day, vehicle) for which an inspection is set in advance
UpperSET: A set of pairs of (day, vehicle) for which a higher-ranked inspection is set in advance
NGSET: A set of pairs of (day, vehicle) for which the inspection cannot be performed because other task is set for the set
TabuList: A set of pairs of (day, vehicle) for which the inspection cannot be performed, registered in the TabuList

Equation (4) represents an objective function for minimizing the number of times of task (the number of times of an inspection) scheduled for a set of vehicles. Equations (5) to (9) are restriction formulas.

Equation (5) indicates that the number of times of an inspection in one day is equal to or smaller than a capacity value. Equation (5) corresponds to the first restriction condition.

Equation (6) represents a cycle restriction condition (an inspection needs to be performed at least once within the number of cycle days). As an example, Equation (6) corresponds to the second restriction condition. In this case, Equation (6) indicates that the inspection or a higher-ranked inspection is always performed at least once between a d-th day and a d+T-th day. Note that when d=l, the inspection or the higher-ranked inspection has to be always performed within T days from the last implementation day. This may be reflected on the restriction formula. For example, since the last implementation day for the vehicle 01 is three days before, this only has to be represented as $x_{1,\,01}+x_{2,\,01}+x_{3,\,01}\leq1$ to indicate that the inspection or the higher-ranked inspection is performed on any one of first to third days.

Equation (7) indicates that, for (date, vehicle) registered in the FixSET or UpperSET, the inspection or the higher-ranked inspection is always performed for the vehicle on the date. Equation (7) corresponds to the third restriction condition.

Equation (8) indicates that, for (date, vehicle) registered in the NGSET or the TabuList, the inspection of the vehicle cannot be performed on the date. Equation (8) corresponds to the fourth restriction condition.

Equation (9) indicates that a variable is 0 or 1.

Note that for the model explained above, a capacity value may be defined for each of implementation places of the scheduling target tasks. A capacity value for the higher-ranked inspection may be added to the constant $C_d$ in advance. Concerning the cycle restriction condition, only implementation days for the first time for the vehicles may be adjusted according to the last implementation day.

The task schedule optimizer 240 calculates an optimum solution or a sub-optimum solution of a variable ($x_{d,\,h}$) by minimizing or sub-minimizing an objective function (an evaluation function) to satisfy the restriction conditions of (5) to (9). As a method of solution, a mathematical programming solver such as Gurobi Optimizer or CPLEX may be used. A meta-heuristic method of solution such as Simulated Annealing or Genetic Algorithm may be used. As a result, the optimum solution or the sub-optimum solution can be calculated. When not all of the restriction conditions can be satisfied for the mathematical model explained above, a reason why the restriction conditions cannot be satisfied may be output. Note that the formulation explained above is an example. Other objective functions and restriction formulas may be used.

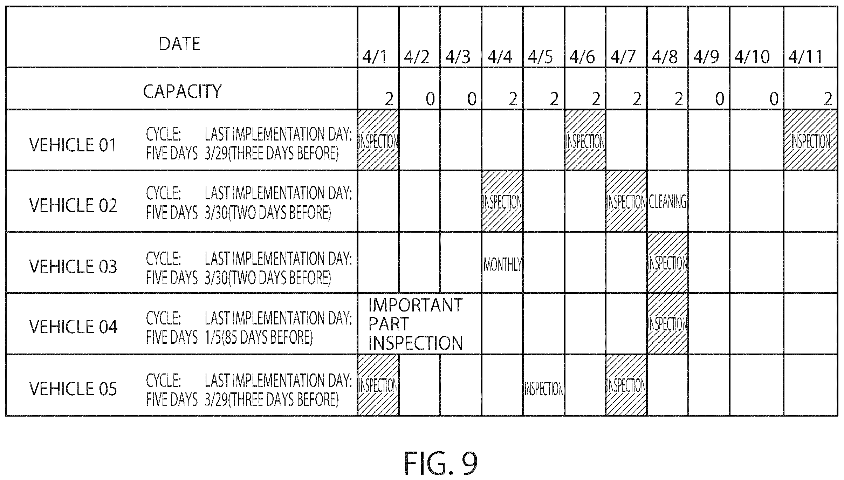

FIG. 9 is a table of an example of a result of calculating the optimum solution or the quasi-optimum solution of the variable ($x_{d,\,h}$). The table is obtained by storing an allocation result of the inspection for the vehicles in the cells of the restriction condition table shown in FIG. 7.

In this example, the inspection is allocated to (4/1, 01 vehicle), (4/6, 01 vehicle), (4/11, 01 vehicle), (4/1, 02 vehicle), (4/7, 02 vehicle), (4/8, 03 vehicle), (4/8, 04 vehicle), (4/1, 05 vehicle), and (4/7, 05 vehicle) anew. As a result, a schedule satisfies the cycle restriction condition, the capacity restriction condition, the NG day restriction condition, and the like.

About the cycle restriction condition, for example, for the 01 vehicle, the inspection is performed in the order of April 1, April 6, and April 11 with respect to the last implementation day March 28. Implementation intervals are respectively four days, five days, and five days. Accordingly, since all the intervals are equal to or less than five days, the cycle restriction condition is satisfied.

For example, in the 03 vehicle, the inspection is performed on April 8. The implementation interval is four days with respect to the monthly inspection on April 4. The implementation interval of the monthly inspection on April 4 is five days with respect to the last implementation day March 30 of the inspection. When the monthly inspection is performed as explained above, the inspection is also regarded as being performed. Accordingly, the cycle restriction condition is satisfied in the 03 vehicle as well.

The cycle restriction condition is also satisfied for the other vehicles.

The task schedule optimizer 240 creates a task schedule (a provisional task schedule) of the inspection of the 01 vehicle to 05 vehicle based on a solution of the variable ($x_{d,\,h}$) calculated by minimization or quasi-minimization of the objective function. FIG. 9 explained above is an example of the provisional task schedule. The task schedule optimizer 240 stores the provisional task schedule in a provisional task schedule DB 420.

The operation allocation processor 250 reads out the provisional task schedule from the provisional task schedule DB 420 and reads out the operation information from the operation information DB 350. The operation allocation processor 250 performs, based on the provisional task schedule, processing for allocating all the operations planned in the days of the provisional task schedule in the operation information to scheduling target vehicles without overlap (operation allocation processing). When all the operations are successfully allocated to the vehicles, the operation allocation processor 250 determines that the provisional task schedule is feasible. When at least one operation can be allocated to none of the vehicles, the operation allocation processor 250 determines that the provisional task schedule is infeasible.

When determining that the provisional task schedule is feasible, the operation allocation processor 250 stores the provisional task schedule in the output task schedule DB 430 as an output task schedule.

When determining that the provisional task schedule is infeasible, the operation allocation processor 250 specifies a date and a vehicle, because of which the operation cannot be allocated. In other words, the operation allocation processor 250 specifies a pair of a date and a vehicle to which the operation is not successfully allocated because the scheduling target task (inspection) is allocated. The operation allocation processor 250 registers the specified pair in the failure information (TabuList). The operation allocation processor 250 stores the failure information in the failure information DB 410. A pair of a date and a vehicle is cumulatively added to the TabuList every time this processing is recursively repeated. Note that nothing is registered in the TabuList in an initial state.

The task schedule optimizer 240 reads out the TabuList from the failure information DB 410 and performs the optimization processing again using the TabuList as the latest TabuList. The task schedule optimizer 240 creates a provisional task schedule again based on a calculated solution of the variable $(x_{d, h})$. The task schedule optimizer 240 stores the provisional task schedule created again in the provisional task schedule DB 420.

The operation allocation processor 250 reads out, from the provisional task schedule DB 420, the provisional task schedule created again. The operation allocation processor 250 performs operation allocation processing on the read-out provisional task schedule. When all the operations indicated by the operation information are successfully allocated to the scheduling target vehicles, the operation allocation processor 250 determines that the provisional task schedule is feasible. When at least one operation can be allocated to none of the vehicles, the operation allocation processor 250 determines that the provisional task schedule is infeasible.

Thereafter, the creation of a provisional task schedule by the task schedule optimizer 240 and the operation allocation processing by the operation allocation processor 250 are repeated until a provisional task schedule determined as feasible by the operation allocation processor 250 is obtained. When the number of times of repetition reaches a predetermined number of times, the operation allocation processor 250 may end the processing and output a provisional task schedule at that point in time.

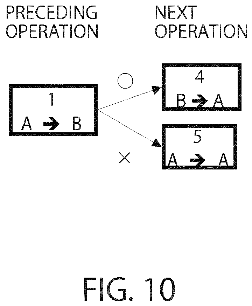

A specific example of the operation allocation processing is explained below with reference to FIGS. 10 to 12.

In the operation allocation processing, for the vehicles, a connection restriction needs to be satisfied concerning a continuous operation. Here, the connection restriction means that the following two conditions are satisfied:

$$\text{An arrival place of the preceding operation} = \text{a departure place of the next operation} \quad (10)$$

$$\text{Arrival time of the preceding operation} < \text{departure time of the next operation} \quad (11)$$

The continuous operation means that, for example, an operation continues via tasks such as an inspection and cleaning interposed therein or the operation continues across days. In both the cases, the connection restriction needs to be satisfied.

FIG. 10 shows a specific example of the connection restriction. When the arrival place of the preceding operation is B, the departure place of the next operation needs to be also B. An operation 1 $\rightarrow$ an operation 4 indicated by a circle in FIG. 10 satisfies Equation (10). Accordingly, the connection restriction is satisfied if Equation (11) is satisfied. The operation 1 $\rightarrow$ an operation 5 indicated by X does not satisfy Equation (10). Accordingly, the connection restriction is not satisfied.

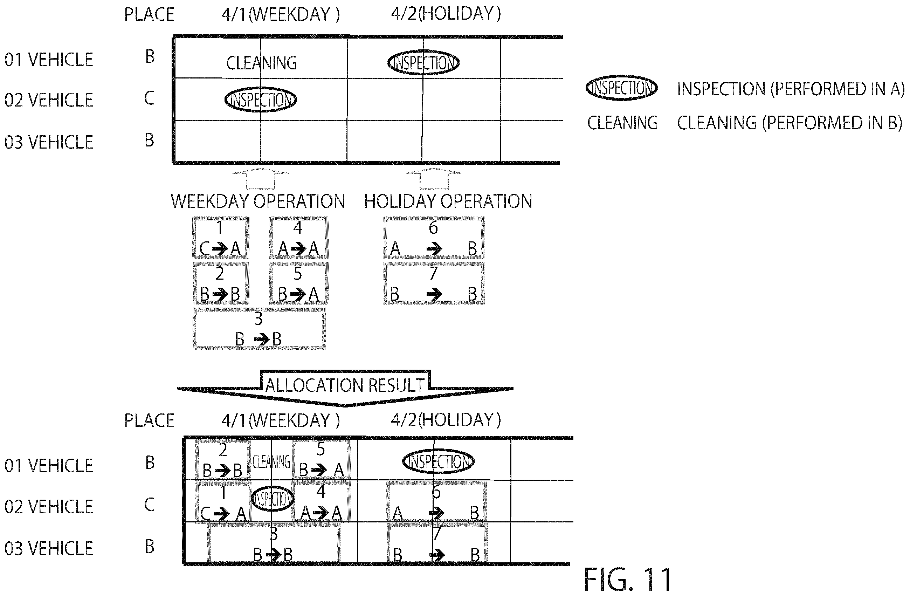

FIG. 11 shows an example in which a set of operations on days indicated by operation information is allocated to vehicles based on a provisional task schedule. The example shown in FIG. 11 is an example in which operation allocation is successful.

For simplification, only the 01 vehicle, the 02 vehicle, and the 03 vehicle are present. In the provisional task schedule, the cleaning is allocated to the 01 vehicle on April 1 and the inspection is allocated to the 03 vehicle.

It is given in advance that a place of the inspection is the place A and a place of the cleaning is the place B. Then the place of the inspection and the place of the cleaning are given in advance for each of the vehicles. This information may be included in the schedule condition, the planned task information, or the like or the user may give the information by separately inputting the information.

The inspection and the cleaning are performed, for example, within a predetermined range of times in the daytime. For example, it is assumed that the inspection and the cleaning are performed, for example, in any continuous two hours between 11:30 and 15:00.

In this approach, if an arrival place of the morning operation of a train operated in the morning coincides with a place of the inspection, the inspection of the train is feasible (the train is in time for the inspection). In other words, only an operation, an arrival station of which coincides with the place of the inspection, can be allocated to a vehicle. In other words, an operation, an arrival station of which does not coincide with the place of the inspection, cannot be allocated to a vehicle for which the inspection is performed. The same applies to the cleaning. For a train operated full day, neither the inspection nor the cleaning can be performed in the day.

A train operated in the afternoon can be allocated to the day after the inspection, the cleaning, or the like is performed as long as the train satisfies the connection restriction.

In the example shown in FIG. 11, the inspection is allocated to the 02 vehicle on April 1. A place on the first day of the 02 vehicle (a departure place on the first day of the scheduling target period) is the place C and a place of the inspection is the place A. Therefore, a morning operation, a departure place of which is the place C and an arrival place of which is the place A, can be allocated to the 02 vehicle. An afternoon operation, a departure place of which is the place A, can be allocated to the 02 vehicle. Taking these into account, a morning operation 1 (C→A) and an afternoon operation 4 (A→A) are allocated to the 02 vehicle. In other words, for the 02 vehicle, the task (the inspection) can be performed in the place A at an interval between the morning operation and the afternoon operation.

The inspection is allocated to the 01 vehicle on April 2 but an operation is not allocated to the 01 vehicle. In that case, an operation, an arrival place of which is the place A, is allocated as the immediately preceding last operation (for example, an afternoon operation on the previous day). In this example, the operation 5, an arrival place of which is the place A, is allocated to the 01 vehicle as an afternoon operation on the previous day, April 1. In this way, when there is room in a vehicle on the day, an operation for moving the vehicle to the place A by the previous day and not allocating an operation to the vehicle on the day may be performed. A vehicle to which an operation is not allocated functions as a spare train.

In the above explanation, it is determined considering the arrival place and the departure place in the morning and afternoon whether the operation can be allocated. However, it may be determined specifically considering departure times and arrival times of the operations and start times and end times of the inspection, the cleaning, and the like whether the operation can be allocated. For example, when arrival time of the morning operation is within a fixed time from the start time of the inspection, the morning operation may be allocated.

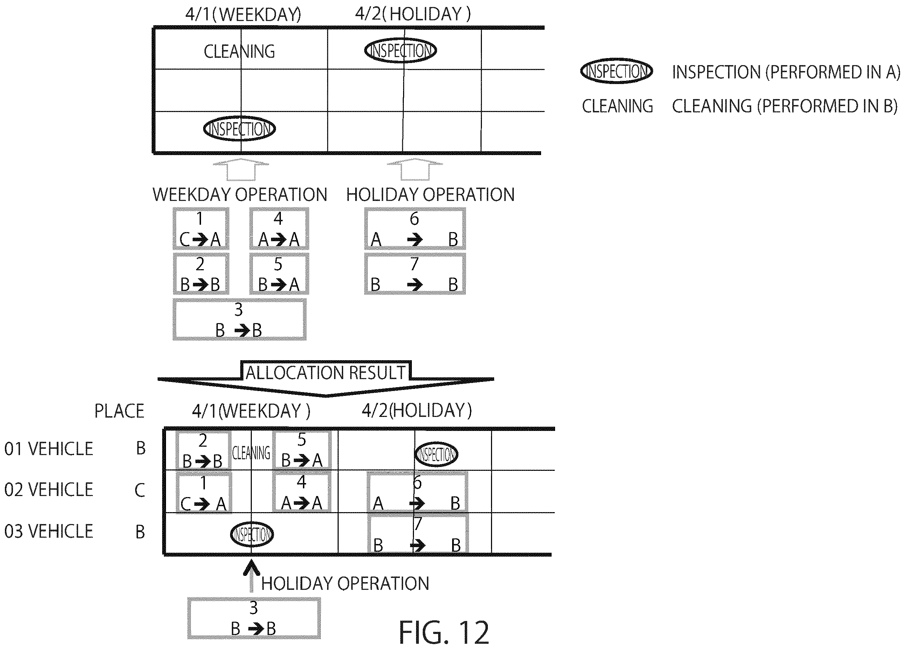

FIG. 12 shows another example in which the set of the operations on the days indicated by the operation information is allocated to the vehicles based on the provisional task schedule. The example of the successful operation allocation is shown in FIG. 11. The example shown in FIG. 12 is an example of failure in the operation allocation.

Unlike the example shown in FIG. 11, in the provisional task schedule, the inspection is allocated to the 03 vehicle rather than the 02 vehicle on April 1. The other conditions are the same as the conditions of the example shown in FIG. 11.

An operation that cannot be allocated is generated when the operations are allocated to satisfy the connection restriction. When the morning operation and the afternoon operation are respectively allocated to the 01 vehicle and the 02 vehicle as shown in FIG. 12, a full day operation 3 (B→B) is left. In the operation 3, since the 03 vehicle cannot arrive at the place A, which is the inspection place, in the morning, the operation 3 cannot be allocated to the 03 vehicle.

In this example, not all of the operations can be allocated to the vehicles not to overlap. In other words, the operation allocation condition cannot be satisfied. Accordingly, this provisional task schedule is determined as infeasible. In this case, (4/1, 03 vehicle) is added to the failure information (TabuList) of the failure information DB 410 and rescheduling is performed by the task schedule optimizer 240. Since (4/1, 03 vehicle) is added to the TabuList, the rescheduling is performed under a restriction condition (a fifth restriction condition) that the inspection is not allocated to the vehicle (the 03 vehicle) on April 1. Therefore, in a provisional task schedule created in the next and subsequent times, the inspection is not allocated to the 03 vehicle on April 1.

In a specific method of determining whether the operation allocation condition is satisfied, as an example, it may be determined whether the operation allocation condition is satisfied for all combination patterns of operations and vehicles. When two or more patterns among the combination patterns satisfy the operation allocation condition, any pattern may be adopted out of the patterns.

Alternatively, a rule concerning the order of selection of patterns may be given in advance. The patterns may be selected in order according to the rule. It may be determined, for the selected patterns, whether all the operations can be allocated. At a point in time when all the operations are successfully allocated, a pattern selected at that point in time is adopted.

When the operation allocation condition is not satisfied for all of a plurality of patterns, any pattern among the patterns may be selected. A pair of a date and a vehicle may be specified for the selected pattern. The specified pair may be added to the TabuList. Note that a pair of a date and a vehicle added to the TabuList can change depending on a pattern to be selected.

For the determination processing for the operation allocation condition, for example, the method disclosed in Japanese Patent No. 5075577 may be used or the other methods may be used.

In the above explanation, the pair of the date and the vehicle added to the TabuList is automatically extracted. However, the user may view an allocation result shown in FIG. 12 or a screen of the provisional task schedule and directly input, from an input device, a pair of a date and a vehicle to be registered in the TabuList. In this case, the task schedule creator 200 adds, to the TabuList, the pair input from the user. Determination processing for the operation allocation condition in the case of use of a designated operation scheme

When certain task (inspection) is set for a certain day and a certain vehicle, one or a plurality of operations for the vehicle are sometimes specifically designated (such operation is referred to as "designated operation"). In such a case, an operation needs to be allocated to the vehicle to satisfy the designated operation. When the designated operation is present, determination processing for satisfaction or dissatisfaction of the operation allocation condition can be accelerated when any one of the following conditions is satisfied.

(Condition 1) When the number of tasks (inspections) set in the day exceeds the number of designated operations, it can be determined that the operation allocation condition is not satisfied.

For example, it is assumed that designated operations of task w1 are u1 and u2. When the task w1 is allocated to vehicles h1, h2, and h3, at least one of u1 and u2 needs to be allocated to each of the vehicles h1, h2, and h3. However, among the three vehicles h1, h2, and h3, a vehicle to which none of the two designated operations u1 and u2 can be allocated is generated. Therefore, at this point in time, it can be determined that the operation allocation condition is not satisfied. A date and a vehicle are added to the TabuList such that the inspection is not allocated to at least any one vehicle among the vehicles h1, h2, and h3 on the day. The user may designate a date and a vehicle or the operation allocation processor 250 may designate a date and a vehicle.

(Condition 2) When there are a plurality of tasks in the day and designated operations of the tasks overlap, it can be determined that the operation allocation condition is not satisfied.

For example, it is assumed that designated operations of the task w1 are u1 and u2 and a designated operation of task w2 is u1. When the task w1 is allocated to the vehicles h1 and h2 and the task w2 is allocated to the vehicle h4, a designated operation cannot be allocated to any one of the three vehicles h1, h2, and h4. For example, when u1 is allocated to the vehicle h1 and u2 is allocated to the vehicle h2, u1 cannot be allocated to the vehicle h4. When u2 is allocated to the vehicle 1 and u1 is allocated to the vehicle h4, u1 or u2 cannot be allocated to the vehicle h2. Therefore, at this point in time, it can be determined that the operation allocation condition is not satisfied. A date and a vehicle are added to the TabuList such that the inspection is not allocated to at least any one of the vehicles h1, h2, and h4 on the day. The user may designate a date and a vehicle or the operation allocation processor 250 may designate a date and a vehicle.

(Condition 3) Further, for example, when a set day of a task is the first day of the scheduling target period, and an operation that cannot be allocated to a vehicle is present among designated operations, it can be determined that the operation allocation condition is not satisfied.

For example, it is assumed that designated operations of the task w1 are u1 and u2 and a designated operation of the task w2 is u1. In some case, the task w1 is allocated respectively to the first days of the vehicles h1 and h2 and u1 can be allocated to none of the vehicles h1 and h2. For example, it is assumed that departure places on the first days of both of the vehicles h1 and h2 are the place A (the vehicles h1 and h2 leave from the yard in the place A) and a departure place of the designated operation u1 is the place B. Even if the designated operation u2 can be allocated to one of the vehicles h1 and h2, the designated operation u1 can be allocated to none the vehicles h1 and h2. Accordingly, in this case, it can be determined that the operation allocation condition is not satisfied. A date and a vehicle are added to the TabuList such that the inspection is not allocated to, for example, other vehicles, departure places of which are the place B, on the days (the first days) of the vehicles. In other words, the inspection is not allocated to a date and a vehicle, because of which an operation cannot be allocated. The user may designate a date and a vehicle or the operation allocation processor 250 may designate a date and a vehicle.

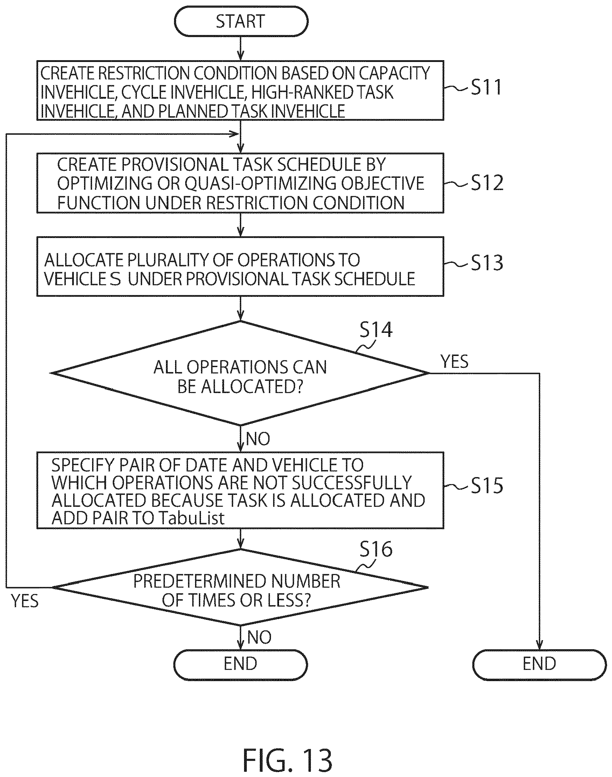

FIG. 13 is a flowchart of the operation of the task schedule creator 200 according to this approach.

The task schedule creator 200 generates a restriction condition using the capacity information DB 310, the cycle information DB 320, the higher-ranked task information DB 330, and the planned task information DB 340 (S11). More specifically, the task schedule creator 200 reads out the capacity information from the capacity information DB 310 and generates a capacity restriction condition from the capacity information. The task schedule creator 200 reads out the cycle information from the cycle information DB 320 and generates a cycle restriction condition. The task schedule creator 200 reads out the higher-ranked task information and the planned task information respectively from the higher-ranked task information DB 330 and the planned task information DB 340 and generates an NG day restriction condition. The task schedule creator 200 initializes the failure information (TabuList).

The task schedule optimizer 240 generates an objective function based on the various restriction conditions generated in step S11 and the schedule condition of the schedule condition DB 300 and optimizes or quasi-optimizes the objective function. In this way, the task schedule optimizer 240 calculates a solution that specifies days when scheduling target tasks (inspection) are allocated to the vehicles (S12). The task schedule optimizer 240 creates, based on the calculated solution, a provisional task schedule in which tasks (scheduling target tasks, a higher-ranked task, and another task) is allocated to the vehicles (S12). The task schedule optimizer 240 stores the provisional task schedule in the provisional schedule DB 420.

The operation allocation processor 250 reads out the provisional task schedule from the provisional schedule DB 420 and reads out the operation information from the operation information DB 350. The operation allocation processor 250 performs operation allocation processing for allocating the operations indicated by the operation information to scheduling target vehicles (S13).

When all the operations are successfully allocated (YES in S14), the operation allocation processor 250 stores the provisional task schedule in the output task schedule DB 430 as an output task schedule. The output device 500 displays the output task schedule in the output task schedule DB 430 on the screen.

When an operation that cannot be allocated among the operations indicated by the operation information is present (NO in S14), the operation allocation processor 250 specifies a date and a vehicle, because of which the operation cannot be allocated (S15). In other words, the operation allocation processor 250 specifies a pair (d, h) of a date and a vehicle to which an operation cannot be allocated because the task (the scheduling target task) is allocated to the pair (d, h) (S15). The operation allocation processor 250 adds the specified pair to the TabuList (S15). When a plurality of operations that cannot be allocated are present, the operation allocation processor 250 specifies (d, h) respectively for all the operations that cannot be allocated. However, the operation allocation processor 250 only has to specify (d, h) for at least one operation among all the operations that cannot be allocated.

The task schedule creator 200 counts the number of times of creation of the provisional task schedule. If the number of times of creation of the provisional task schedule is equal to or smaller than a predetermined number of times, the task schedule creator 200 returns to step S12 and creates a provisional task schedule again. In this case, the task schedule creator 200 adds the TabuList as a restriction condition. Consequently, the scheduling target task is not allocated to the pairs of the dates and the vehicles included in the TabuList. (d, h) is cumulatively added to the TabuList every time step S15 is repeated.

When the number of times of creation of a provisional task schedule exceeds the predetermined number of times, the task schedule creator 200 ends this processing. In this case, the task schedule creator 200 may store a provisional task schedule at the present point in time and the TabuList in the output task schedule DB 430. The output device 500 may display the provisional task schedule in the output task schedule DB 430 and the TabuList on the screen. The user may manually adjust the provisional task schedule referring to the TabuList and create an output task schedule.

Note that in the flowchart of FIG. 13, the operations are allocated after the task scheduling. However, steps S13 to S16 for the allocation of the operations may be omitted after the task schedule is created in steps S11 and S12. Such an operation could be performed, for example, when allocation possibility of the operations is not regarded as important or when the operations are allocated in any task schedule.

As explained above, according to this approach, days of the tasks allocated to the vehicles are determined based on the cycle restriction condition for the vehicles and the capacity restriction condition for the number of times of the inspection feasible per unit period. Consequently, it is possible to create a task schedule considering individual restrictions (for example, a cycle of the inspection) of the vehicles and restrictions such as implementation ability of the inspection.

When the higher-ranked inspection is set for the vehicles, it is possible to determine satisfaction or dissatisfaction of the cycle restriction condition considering the higher-ranked inspection as well by regarding that the scheduling target task is performed on the day of the higher-ranked inspection. It is possible to reduce expenses of the inspection by creating a task schedule to minimize a total number of times of implementation of tasks.

When the inspection (the scheduling target task) allocated in advance is present, it is possible to create a task schedule considering individual restrictions of the vehicles by always allocating the inspection on the day of the inspection.

When a task other than the scheduling target task is allocated to the vehicles in advance, it is possible to create a task schedule considering individual restrictions of the vehicles by not allocating the inspection to the vehicles on the day of the task.

When the operation allocation processing for allocating planned operations to scheduling target vehicles is performed based on the created task schedule and an operation that cannot be allocated is present, the task schedule is created again. Consequently, it is possible to create a task schedule capable of guaranteeing implementation of the planned operations.

When a designated operation is given for certain task, it is also possible to create a task schedule capable of implementing the designated operation.

Second approach

In the first approach, the scheduling target task is the inspection and the upper limit value of the number of cycle days needs to be satisfied. However, in a second approach, a scheduling target task is cleaning and a target value of the number of cycle days does not necessarily need to be satisfied. For example, when the scheduling target task is cleaning or the like, an interval of the tasks (the cleaning) may exceed the number of cycle days. However, in some case, the interval is desired to be set as close as possible to the target value of the number of cycle days. A block diagram in this approach is FIG. 1 as in the first approach. Differences from the first approach are mainly explained below.

In this approach, a capacity value is given for each of types of the cleaning or a combination of the types of the cleaning. It is assumed that task amounts and task facilities are different according to the types of the cleaning. Therefore, capacity information input from the capacity-information input device 120 includes capacity values for the respective types.

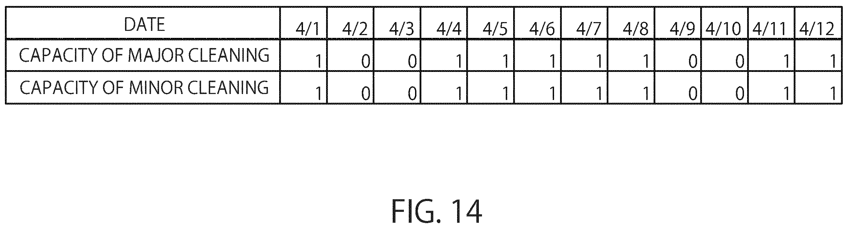

FIG. 14 shows an example of the capacity information in this approach. In this example, capacities of major cleaning and minor cleaning are respectively 1 concerning the weekdays. In other words, on the weekdays, each of the major cleaning and the minor cleaning can be performed once. Capacities of the major cleaning and the minor cleaning are respectively 0 concerning the holidays.

Since a task amount of the major cleaning is larger than a task amount of the minor cleaning, when the capacities of the major cleaning and the minor cleaning are respectively 1, it is also possible to perform only the minor cleaning twice in one day. However, the major cleaning cannot be performed twice in one day. Alternatively, it may be possible to perform only the minor cleaning three times in one day. Possible combinations of the numbers of times of the major cleaning and the minor cleaning may be defined to enable selection of any combination.

In this approach, execution order of the types of cleaning is given in advance for each of vehicles. In this example, there are two types of the major cleaning and the minor cleaning. The major cleaning and the minor cleaning are alternately performed according to the types of the cleaning performed for the last time. For example, the cleaning is executed in the order of the major cleaning, the minor cleaning, the major cleaning, and the minor cleaning. Therefore, cycle information input from the cycle-information input device 130 includes the types of the cleaning performed on the last implementation day.

In this approach, the restriction condition of the number of cycle days in the first approach is changed from the upper limit value of the number of days between tasks to a target value (a target cycle). The target cycle is not a condition that has to be always kept and is a nonbinding target. The cycle information input from the cycle-information input device 130 includes the target cycle rather than the number of cycle days.

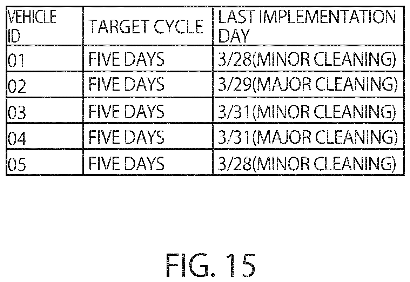

FIG. 15 shows an example of the cycle information according to this approach. The target cycle is five days for all the vehicles. Types of the cleaning performed on the last implementation day for the vehicles are included in the cycle information.

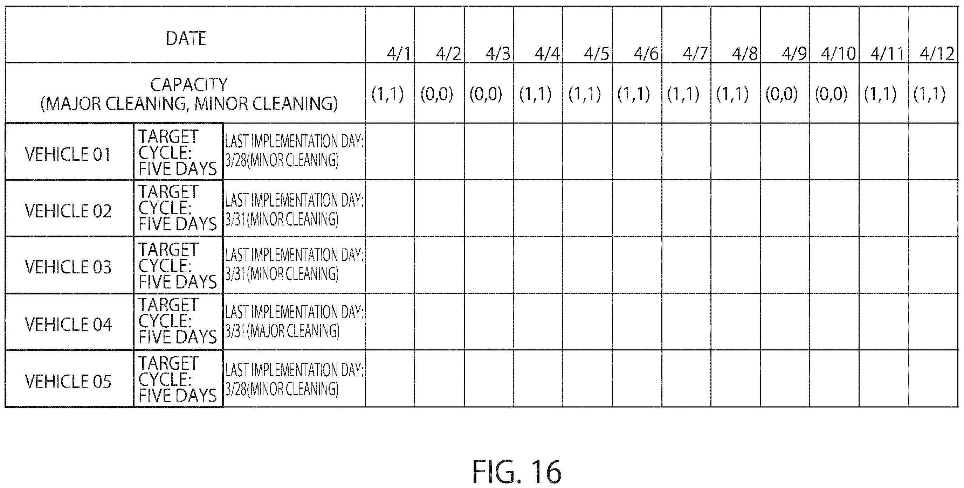

FIG. 16 shows an example of a restriction condition table of a cleaning schedule. The restriction condition table collectively includes information input from the various input devices 110 to 150 according to this approach. Unlike the first approach, types of the cleaning performed on the last implementation day are included in the restriction condition table. The number of cycle days in the first approach is changed to a target cycle. A capacity value is given according to a type of the cleaning. For example, on April 1, a capacity value of the major cleaning is 1 and a capacity value of the minor cleaning is 1.

An optimization model for a task schedule (a cleaning schedule) by the task schedule optimizer 240 is explained below. A model for obtaining a cleaning schedule for implementing K kinds of cleaning for each of vehicles 1 to H in a period including first to D-th days is given as a mathematical programming problem described below.

[Equation 2]

$$\min. \sum_h \sum_k \left| \sum_d d \cdot (x_{d,h,k} - x_{d,h,k-1}) - P \right| \qquad (12)$$

$$s.t. \; y_{d,t} = \sum_{(h,k):kind(h,k)\equiv t} x_{d,h,k}, \forall d \in D, \forall t \in T \qquad (13a)$$

$$y_{d,t} \le C_{d,t}, \forall d \in D, \forall t \in T \qquad (13b)$$

$$\sum_d x_{d,h,k} = 1, \qquad \forall h \in H, \forall k \in K \qquad (14)$$

$$\sum_d d \cdot (x_{d,h,k} - x_{d,h,k-1}) \ge 0, \qquad \forall h \in H, \forall k \in \{2,3,4,\dots,K'\} \; (15)$$

$$\sum_k x_{d,h,k} = 1, \qquad\qquad \forall(d,h) \in FixSET \cup UpperSET \quad (16)$$

$$x_{d,h,k} = 0, \qquad\qquad \forall(d,h) \in TabuList \cup NGSET \quad (17)$$

$$x_{d,h,k} \in \{0,1\} \qquad , \qquad \forall d \in D, \forall h \in H, \forall k \in K \quad (18)$$

Where, the characters are defined as follows:

A set of days {1, 2, ..., D'} ($\equiv$D)
A set of vehicles {1, 2, ..., H'} ($\equiv$H)
A set of the numbers of times {1, 2, ..., K'} ($\equiv$K)
A set of types of the cleaning {1, 2, ..., T'} ($\equiv$T)
A variable $x_{d,h,k}$: A variable of 0 or 1 indicating whether k-th time cleaning is performed in an h vehicle on a d-th day
A variable $y_{d,t}$: A variable representing the number of times cleaning of a type t is performed on the d-th day
A constant P: The number of days of a target cycle (which may be calculated by D/K)
A constant $C_{d,t}$: A maximum number of times of implementation of the cleaning of the type t on the d-th day
kind(h, k): Representing a type of k-th time task of the h formation
FixSET: A set of (day, vehicle) for which the cleaning is set in advance
UpperSET: A set of (day, vehicle) for which a higher-ranked inspection is set in advance
NGSET: A set of (day, vehicle) for which the cleaning cannot be performed because other task is set for the set in advance
TabuList: A set of (day, vehicle) for which the cleaning cannot be performed, registered in the TabuList

A difference from the first approach is that a suffix of the variable x is (d, h, k) representing the k-th time in the h vehicle on the d-th day rather than (d, h) representing the h vehicle on the d-th day.

Equation (12) represents an objective function representing minimization of a sum of deviations from the target cycle P. This is because

$$\sum_d d \cdot (x_{d,h,k} - x_{d,h,k-1})$$

represents the number of elapsed days from a k-1-th time implementation day to a k-th time implementation day of the h vehicle and deviation between the number of elapsed days and the target cycle is represented by

$$\left| \sum_d d \cdot (x_{d,h,k} - x_{d,h,k-1}) - P \right|$$

Note that when k=1,

$$d \cdot (x_{d,h,k} - x_{d,h,k-1})$$

represents an interval between the last implementation day and a first-time implementation day for convenience' sake.

Equation (13a) and Equation (13b) represent a capacity restriction condition in one day. Concerning a day when an operator is on holiday and the cleaning cannot be performed, $C_{d,t}$ only has to be set to 0. A restriction formula for preventing each of the types of the cleaning from exceeding a capacity is used. However, as explained above, it is also possible to allow "although the capacities of the major cleaning and the minor cleaning are respectively 1, since the task amount of the major cleaning is larger than the task amount of the minor cleaning, it is also possible to perform only the minor cleaning twice in one day". In this case, for example, the minor cleaning only has to be defined as t=1 and the major cleaning only has to be defined as t=2. Equation (13c) and Equation (13d) described below only have to be adopted instead of Equation (13b).

[Equation 3]

$$y_{d,1} + y_{d,2} \leq 2, \forall d \in D \qquad (13c)$$

$$y_{d,2} \leq 1, \forall d \in D \qquad (13d)$$

Equation (13c) indicates that a total of a variable of the major cleaning on the d-th day and a variable of the minor cleaning on the d-th day is two or less. Equation (13d) indicates that the variable of the major cleaning on the d-th day is one or less. According to a combination of these inequalities, as a result, a capacity condition "although the capacities of the major cleaning and the minor cleaning are respectively 1, since the task amount of the major cleaning is larger than the task amount of the minor cleaning, it is also possible to perform only the minor cleaning twice in one day" can be represented. This capacity condition represents a restriction concerning a combination of the numbers of times of a plurality of types of cleaning feasible in one day.

Equation (14) and Equation (15) are combined to represent that the first-time cleaning to the K-th time cleaning are executed in order.

Equation (16) to Equation (18) are the same restrictions as the restrictions in the first approach except that variables are different from the variables in the first approach.

Concerning the target cycle, a target value itself of a cycle is not given. The target cycle may be calculated as "the length of a schedule period ÷ the number of times of implementation of scheduling target task" based on the length of the schedule period and the number of times of implementation of the scheduling target task (cleaning) in the schedule period. For example, when the length of the schedule period is 30 days and the number of times of implementation of the scheduling target task is four, the target cycle is 30/4=7.5 (days).

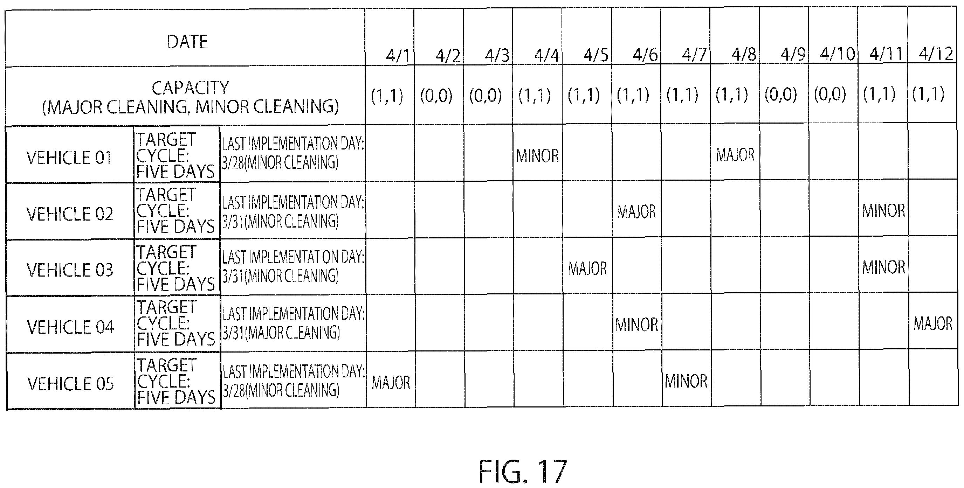

FIG. 17 shows an example of a cleaning schedule created by the task schedule optimizer 240 based on the restriction condition shown in the table of FIG. 16. "Major" represents the major cleaning and "minor" represents the minor cleaning. The cleaning is performed for the vehicles in the order of the major cleaning, the minor cleaning, the major cleaning, and the minor cleaning. A cleaning interval for the vehicles is not always five days or less but is close to five days. Total numbers of times of the minor cleaning and the major cleaning on the days are respectively once at most except on April 11. The minor cleaning is performed twice on April 11. This satisfies the capacity condition of Equations (13c) and (13d) "although the capacities of the major cleaning and the minor cleaning are respectively 1, since the task amount of the major cleaning is larger than the task amount of the minor cleaning, it is also possible to perform only the minor cleaning twice in one day".

In this approach, the capacity values are provided for the respective types of the cleaning. However, the type of the cleaning may be one type. In this case, the capacity value only has to be set as in the first approach.

According to this approach, by deciding, for each of the types of the task, a restriction of the number of times of task feasible in one day (unit period), it is possible to create a task schedule considering an implementation ability of each of the types. When implementation order of the types of the task is determined for each of the vehicles, it is also possible to create a task schedule satisfying the implementation order. By deciding a restriction condition for the target cycle for each of the vehicles, it is possible to create a task schedule for the vehicles to set a task interval as close as possible to the target cycle. In this way, it is possible to create a task schedule considering individual restrictions for each of the vehicles.

Other approaches

In the first and second approaches, the scheduling target task is one type. However, task schedules may be simultaneously created for a plurality of types of scheduling target tasks. In this case, a task schedule may be created for each of the types or task schedules may be simultaneously created for the plurality of types. When the task schedules are simultaneously created, for example, in the formulation of Equation (4) to Equation (9), the variables and the restriction formulas only have to be introduced for each kind of scheduling target tasks. The objective function only has to be defined by a sum (or a weighted sum) of the numbers of times of implementation of the respective kinds of the scheduling target tasks.

The first and second approaches are based on the premise that all the task schedules are created from the beginning. However, allocation of the scheduling target tasks may be finely adjusted with respect to an existing schedule (a temporary schedule created manually or by some system or a schedule in which a task is simply allocated according to a cycle). For example, the existing schedule is given as a provisional schedule and, thereafter, the same processing as the processing in the first or second approach is performed. In this case, in Equation (4) or Equation (12), which is the objective function, not only the total number of times of implementation but also a deviation degree from an original schedule (for example, a difference in the total number of times of implementation) may be included in the objective function. Alternatively, an evaluation function representing the deviation degree may be separately defined and a weighted sum of the evaluation function and the objective function may be minimized.

In the existing schedule explained above, when the interval of the scheduling target tasks is sufficiently small compared with the cycle (for example, the cycle is five days and the interval of the scheduling target tasks is two days), by temporally shifting the scheduling target task backward, as a result, it is possible to create a schedule for reducing the total number of times of implementation. Specifically, such a schedule can be realized by simple processing for sequentially repeatedly determining whether the scheduling target task allocated in the existing schedule can be shifted backward in the time direction and, if the scheduling target task can be shifted, shifting the task backward day by day.

(Hardware Configuration)

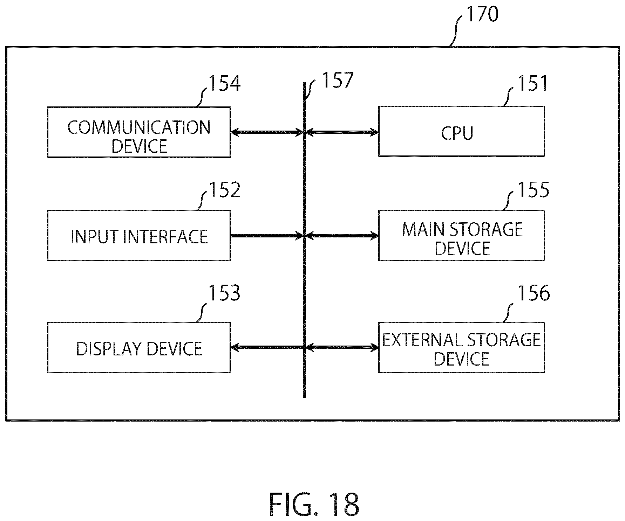

FIG. 18 illustrates a hardware configuration of the task schedule creation apparatus (information processing apparatus) in the present approach. The information processing apparatus in the present approach is configured with a computer device 170. The computer device 170 includes a CPU151, an input interface 152, a display device 153, a communication device 154, a main storage device 155 and an external storage device 156, which are connected to each other with a bus 157.

The CPU (central processing unit) 101 executes a computer program on the main storage device 155. The program is a program which realizes the above-described respective functional components of the information processing apparatus 101. Each functional component is realized by the CPU151 executing the program.

The input interface 152 is a circuit for inputting an operation signal from an input device such as a keyboard, a mouse and a touch panel to the information processing apparatus 101. The input function of the elements 100 can be performed in the input interface 152.

The display device 153 displays data or information output from the information processing apparatus. While the display device 153 is, for example, an LCD (Liquid Crystal Display), an organic electroluminescence display, a CRT (Cathode Ray Tube) or a PDP (Plasma Display Panel), the display device 153 is not limited to these. The data or information output from the computer device 170 can be displayed at this display device 153. The output device 500 can be performed in the display device 153.

The communication device 154 is a circuit for the information processing apparatus 101 to perform communication with an external device in a wireless or wired manner. Data can be input from the external device via the communication device 154. Information input from the external device can be stored in the DB. The communication function of the element 100 can be performed in the communication device 154.

The main storage device 155 stores the program for realizing processing of the present approach, data necessary for execution of the program, data generated by execution of the program, or the like. The program is expanded on the main storage device 155 and executed. While the main storage device 155 is, for example, a RAM, a DRAM and an SRAM, the main storage device 155 is not limited to these. Each DB and each storage in each approach may be constructed on the main storage device 155.

The external storage device 156 stores the program, data necessary for execution of the program, data generated by execution of the program, or the like. These program and data are read out to the main storage device 155 in the processing of the present approach. While the external storage device 156 is, for example, a hard disk, an optical disk, a flash memory, and a magnetic tape, the external storage device 156 is not limited to these. Each DB and each storage in each approach may be constructed on the external storage device 156.

Note that the program may be installed in the computer device 170 in advance or may be stored in a storage medium such as a CD-ROM. Further, the program may be uploaded on the Internet.

The computer device 170 may be provided with one or more processors 151, input interfaces 152, display devices 153, communication devices 154 and main memories 155, and peripheral equipment such as a printer and a scanner may be connected to the computer device 170.

Further, the computer device 170 may be configured with a single computer device 170 or may be configured as a system including a plurality of computer devices 170 which are connected to each other.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. A task schedule creation apparatus comprising:
a task schedule creator configured to create a task schedule including a plurality of tasks for a target based on

a first restriction condition concerning a number of times of implementation of a task per unit period and
a second restriction condition concerning length of a period between the tasks .

Clause 2. The task schedule creation apparatus according to clause 1, wherein the task schedule creator determines whether the second restriction condition is satisfied based on first information including a planned day when a higher-ranked task including the task is performed on the target, wherein implementation of the higher-ranked task is regarded as implementation of the task.

Clause 3. The task schedule creation apparatus according to clause 1 or 2, wherein the task schedule creator creates the task schedule based on second information including a planned day when the task is performed on the target, under a third restriction condition that the task is allocated to the target on the planned day.

Clause 4. The task schedule creation apparatus according to any one of clauses 1 to 3, wherein the task schedule creator creates the task schedule, based on third information including a planned day when other task different from the task is performed on the target task, under a fourth restriction condition that the task is not allocated to the planned day.

Clause 5. The task schedule creation apparatus according to any one of clauses 1 to 4, wherein the second restriction condition includes that the length of the period between the tasks is an upper limit value or less.

Clause 6. The task schedule creation apparatus according to any one of clauses 1 to 4, wherein the second restriction condition includes that the length of the period between the tasks is made close to a target value.

Clause 7. The task schedule creation apparatus according to any one of clauses 1 to 6, further comprising an operation allocation processor configured to allocate, based on the task schedule, a plurality of operations to the plurality of targets, wherein
when an operation allocatable to none of targets among the plurality of operations is present in at least any one day in a period for the task schedule, the task schedule creator specifies a target to which the operation cannot be allocated, and recreates the task schedule under a fifth restriction condition that the task is not allocated to the target on the day.

Clause 8. The task schedule creation apparatus according to clause 7, wherein
at least one of the plurality of operations is a first designated operation,
the first designated operation is an operation to be performed before or after a first task, and
when the first designated operation cannot be allocated before or after the first task, the task schedule creator determines that the operation allocatable to none of the target s is present.

Clause 9. The task schedule creation apparatus according to any one of clauses 1 to 8, wherein the first restriction condition includes a restriction concerning the number of times of the implementation of the task per the unit period, for an implementation place of the task, a type of the task, or a combination of the implementation place and the type of the task.

Clause 10. The task schedule creation apparatus according to any one of clauses 1 to 8, wherein
a plurality of types of tasks are present, and
the first restriction condition includes a combination of numbers of times of implementation of the plurality of types of tasks which can be performed per the unit period.

Clause 11. The task schedule creation apparatus according to any one of clauses 1 to 10, wherein the task schedule creator creates the task schedule by minimizing or quasi-minimizing a total number of times of implementation of the task for the target.

Clause 12. The task schedule creation apparatus according to any one of clauses 1 to 11, wherein the task schedule creator creates an objective function including a plurality of variables including whether tasks are allocated to the target for days in a period for the task schedule and solves the objective function based on the first restriction condition and the second restriction condition to create the task schedule.

Clause 13. The task schedule creation apparatus according to any one of clauses 1 to 12, wherein the unit period is one day.

Clause 14. The task schedule creation apparatus according to any one of clauses 1 to 13, further comprising an output device configured to display the task schedule.

Clause 15. The task schedule creation apparatus according to any one of clauses 1 to 6 and 9 to 13, wherein the second restriction condition includes restriction conditions concerning the length of the period between the tasks for a plurality of the targets, and the task schedule creator creates task schedules for the plurality of targets.

Clause 16. The task schedule creation apparatus according to any one of clauses 1 to 15, wherein the target is a moving vehicle.

Clause 17. The task schedule creation apparatus according to any one of clauses 1 to 15, wherein the target is a vehicle.

Clause 18. A task schedule creation method comprising:

creating a task schedule including a plurality of tasks for a target based on
a first restriction condition concerning a number of times of implementation of a task per unit period and
a second restriction condition concerning length of a period between the tasks.

Clause 19. A non-transitory computer readable medium having a computer program stored therein which causes a computer to perform processes comprising:
creating a task schedule including a plurality of tasks for a target task based on

a first restriction condition concerning a number of times of implementation of a task per unit period and
a second restriction condition concerning length of a period between the tasks.

**Claims**

1. A task schedule creation apparatus comprising:
a task schedule creator configured to create a task schedule including a plurality of tasks for a target based on

a first restriction condition concerning a number of times of implementation of a task per unit period and
a second restriction condition concerning length of a period between the tasks.

2. The task schedule creation apparatus according to claim 1, wherein the task schedule creator determines whether the second restriction condition is satisfied based on first information including a planned day when a higher-ranked task including the task is performed on the target, wherein implementation of the higher-ranked task is regarded as implementation of the task.

3. The task schedule creation apparatus according to claim 1 or 2, wherein the task schedule creator creates the task schedule based on second information including a planned day when the task is performed on the target, under a third restriction condition that the task is allocated to the target on the planned day.

4. The task schedule creation apparatus according to any one of claims 1 to 3, wherein the task schedule creator creates the task schedule, based on third information including a planned day when other task different from the task is performed on the target task, under a fourth restriction condition that the task is not allocated to the planned day.

5. The task schedule creation apparatus according to any one of claims 1 to 4, wherein the second restriction condition includes that the length of the period between the tasks is an upper limit value or less.

6. The task schedule creation apparatus according to any one of claims 1 to 4, wherein the second restriction condition includes that the length of the period between the tasks is made close to a target value.

7. The task schedule creation apparatus according to any one of claims 1 to 6, further comprising an operation allocation processor configured to allocate, based on the task schedule, a plurality of operations to the plurality of targets, wherein
when an operation allocatable to none of targets among the plurality of operations is present in at least any one day in a period for the task schedule, the task schedule creator specifies a target to which the operation cannot be allocated, and recreates the task schedule under a fifth restriction condition that the task is not allocated to the target on the day.

8. The task schedule creation apparatus according to claim 7, wherein
at least one of the plurality of operations is a first designated operation,
the first designated operation is an operation to be performed before or after a first task, and
when the first designated operation cannot be allocated before or after the first task, the task schedule creator determines that the operation allocatable to none of the target s is present.

9. The task schedule creation apparatus according to any one of claims 1 to 8, wherein the first restriction condition includes a restriction concerning the number of times of the implementation of the task per the unit period, for an implementation place of the task, a type of the task, or a combination of the implementation place and the type of the task.

10. The task schedule creation apparatus according to any one of claims 1 to 8, wherein
a plurality of types of tasks are present, and
the first restriction condition includes a combination of numbers of times of implementation of the plurality of types of tasks which can be performed per the unit period.

11. The task schedule creation apparatus according to any one of claims 1 to 10, wherein the task schedule creator creates the task schedule by minimizing or quasi-minimizing a total number of times of implementation of the task for the target.

12. The task schedule creation apparatus according to any one of claims 1 to 11, wherein the task schedule creator creates an objective function including a plurality of variables including whether tasks are allocated to the target for days in a period for the task schedule and solves the objective function based on the first restriction condition and the second restriction condition to create the task schedule.

13. The task schedule creation apparatus according to any one of claims 1 to 12, wherein the unit period is one day.

14. The task schedule creation apparatus according to any one of claims 1 to 13, further comprising an output device configured to display the task schedule.

15. The task schedule creation apparatus according to any one of claims 1 to 6 and 9 to 13, wherein
the second restriction condition includes restriction conditions concerning the length of the period between the tasks for a plurality of the targets, and
the task schedule creator creates task schedules for the plurality of targets.

16. The task schedule creation apparatus according to claim 1, wherein the target is a moving vehicle.

17. The task schedule creation apparatus according to claim 1, wherein the target is a vehicle.

18. A task schedule creation method comprising:
creating a task schedule including a plurality of tasks for a target based on

a first restriction condition concerning a number of times of implementation of a task per unit period and
a second restriction condition concerning length of a period between the tasks .

19. A computer program for causing a computer to perform processes comprising:
creating a task schedule including a plurality of tasks for a target task based on

a first restriction condition concerning a number of times of implementation of a task per unit period and
a second restriction condition concerning length of a period between the tasks.

FIG. 1

TASK SCHEDULE CREATION APPARATUS 101

INPUT DEVICE 100
- SCHEDULE-CONDITION INPUT DEVICE 110
- CAPACITY-INVEHICLE INPUT DEVICE 120
- CYCLE-INVEHICLE INPUT DEVICE 130
- HIGH-RANKED-TASK INVEHICLE INPUT DEVICE 140
- PLANNED-TASK INVEHICLE INPUT DEVICE 150
- OPERATION-INVEHICLE INPUT DEVICE 160

SCHEDULE CONDITION DB 300
CAPACITY INVEHICLE DB 310
CYCLE INVEHICLE DB 320
HIGH-RANKED TASK INVEHICLE DB 330
PLANNED TASK INVEHICLE DB 340
OPERATION INVEHICLE DB 350

TASK SCHEDULE CREATOR 200
- CAPACITY-RESTRICTION-CONDITION GENERATOR 210
- CYCLE-RESTRICTION-CONDITION GENERATOR 220
- NG-DAY-RESTRICTION-CONDITION GENERATOR 230
- TASK SCHEDULE OPTIMIZER 240
- OPERATION ALLOCATION PROCESSOR 250

PROVISIONAL SCHEDULE DB 420
FAILURE INVEHICLE DB 410
OUTPUT TASK SCHEDULE DB 430

OUTPUT DEVICE 500

EXAMPLE OF SCHEDULE CONDITION
·CREATION PERIOD: APRIL 1 TO 11
·SCHEDULING TARGET VEHICLES: VEHICLE S 01 TO 05
·SCHEDULING TARGET TASK: TRAIN INSPECTION
·THE NUMBER OF CYCLE DAYS (IN CASE OF COMMON TO ALL VEHICLE S ): FIVE DAYS

# FIG. 2

| DATE | 4/1 | 4/2 | 4/3 | 4/4 | 4/5 | 4/6 | 4/7 | 4/8 | 4/9 | 4/10 | 4/11 |
|---|---|---|---|---|---|---|---|---|---|---|---|
| CAPACITY | 2 | 0 | 0 | 2 | 2 | 2 | 2 | 2 | 0 | 0 | 2 |

FIG. 3A

| DATE | 4/1 | 4/2 | 4/3 | 4/4 | 4/5 | 4/6 | 4/7 | 4/8 | 4/9 | 4/10 | 4/11 |
|---|---|---|---|---|---|---|---|---|---|---|---|
| CAPACITY OF A RAILYARD | 1 | 0 | 0 | 1 | 1 | 1 | 1 | 1 | 0 | 0 | 1 |
| CAPACITY OF B RAILYARD | 1 | 0 | 0 | 1 | 1 | 1 | 1 | 1 | 0 | 0 | 1 |

FIG. 3B

| VEHICLE ID | THE NUMBER OF CYCLE DAYS | LAST IMPLEMENTATION DAY |
|---|---|---|
| 01 | FIVE DAYS | 3/29(THREE DAYS BEFORE) |
| 02 | FIVE DAYS | 3/30(TWO DAYS BEFORE) |
| 03 | FIVE DAYS | 3/30(TWO DAYS BEFORE) |
| 04 | FIVE DAYS | 1/5(85 DAYS BEFORE) |
| 05 | FIVE DAYS | 3/29(THREE DAYS BEFORE) |

# FIG. 4

・MONTHLY INSPECTION IS HIGH-RANKED INSPECTION
 OF TRAIN INSPECTION
・IMPORTANT PART INSPECTION IS HIGH-RANKED INSPECTION OF
 TRAIN INSPECTION

# FIG. 5

EXAMPLE OF PLANED TASK INVEHICLE
・02 VEHICLE, 4/8, CLEANING
・03 VEHICLE, 4/4, MONTHLY INSPECTION
・04 VEHICLE, 1/10 TO 4/3, IMPORTANT PART INSPECTION
・05 VEHICLE, 4/5, TRAIN INSPECTION

# FIG. 6

| DATE | | 4/1 | 4/2 | 4/3 | 4/4 | 4/5 | 4/6 | 4/7 | 4/8 | 4/9 | 4/10 | 4/11 |
|---|---|---|---|---|---|---|---|---|---|---|---|---|
| CAPACITY | | 2 | 0 | 0 | 2 | 2 | 2 | 2 | 2 | 0 | 0 | 2 |
| VEHICLE 01 | CYCLE: LAST IMPLEMENTATION DAY: FIVE DAYS 3/29(THREE DAYS BEFORE) | | | | | | | | | | | |
| VEHICLE 02 | CYCLE: LAST IMPLEMENTATION DAY: FIVE DAYS 3/30(TWO DAYS BEFORE) | | | | | | | | CLEANING | | | |
| VEHICLE 03 | CYCLE: LAST IMPLEMENTATION DAY: FIVE DAYS 3/30(TWO DAYS BEFORE) | | | | MONTHLY | | | | | | | |
| VEHICLE 04 | CYCLE: LAST IMPLEMENTATION DAY: FIVE DAYS 1/5(85 DAYS BEFORE) | IMPORTANT PART INSPECTION | | | | | | | | | | |
| VEHICLE 05 | CYCLE: LAST IMPLEMENTATION DAY: FIVE DAYS 3/29(THREE DAYS BEFORE) | | | | INSPECTION | | | | | | | |

FIG. 7

WEEKDAY OPERATION

| 1 | | 4 |
|---|---|---|
| C → A | | A → A |

| 2 | | 5 |
|---|---|---|
| B → B | | B → A |

| 3 |
|---|
| B → B |

HOLIDAY OPERATION

| 6 |
|---|
| A → B |

| 7 |
|---|
| B → B |

LEGEND

$t_1$      $t_2$

| OPERATION NUMBER |
|---|
| A → B |

A: DEPARTURE PLACE
B: ARRIVAL PLACE
$t_1$: DEPARTURE PLACE
$t_2$: ARRIVAL PLACE

FIG. 8

25

| DATE | | | 4/1 | 4/2 | 4/3 | 4/4 | 4/5 | 4/6 | 4/7 | 4/8 | 4/9 | 4/10 | 4/11 |
|---|---|---|---|---|---|---|---|---|---|---|---|---|---|
| CAPACITY | | | 2 | 0 | 0 | 2 | 2 | 2 | 2 | 2 | 0 | 0 | 2 |
| VEHICLE 01 | CYCLE: FIVE DAYS | LAST IMPLEMENTATION DAY: 3/29(THREE DAYS BEFORE) | INSPECTION | | | | | INSPECTION | | | | | | INSPECTION |
| VEHICLE 02 | CYCLE: FIVE DAYS | LAST IMPLEMENTATION DAY: 3/30(TWO DAYS BEFORE) | | | | INSPECTION | | | INSPECTION | CLEANING | | | |
| VEHICLE 03 | CYCLE: FIVE DAYS | LAST IMPLEMENTATION DAY: 3/30(TWO DAYS BEFORE) | | | | MONTHLY | | | | INSPECTION | | | |
| VEHICLE 04 | CYCLE: FIVE DAYS | LAST IMPLEMENTATION DAY: 1/5(85 DAYS BEFORE) | IMPORTANT PART INSPECTION | | | | | | | INSPECTION | | | |
| VEHICLE 05 | CYCLE: FIVE DAYS | LAST IMPLEMENTATION DAY: 3/29(THREE DAYS BEFORE) | INSPECTION | | | | INSPECTION | | INSPECTION | | | | |

FIG. 9

EP 3 792 844 A1

PRECEDING OPERATION    NEXT OPERATION

| 1 |
| A → B |

○    | 4 |
| B → A |

×    | 5 |
| A → A |

FIG. 10

FIG. 11

| PLACE | | 4/1(WEEKDAY) | 4/2(HOLIDAY) |
|---|---|---|---|
| 01 VEHICLE | B | CLEANING | INSPECTION |
| 02 VEHICLE | C | INSPECTION | |
| 03 VEHICLE | B | | |

INSPECTION  INSPECTION (PERFORMED IN A)
CLEANING  CLEANING (PERFORMED IN B)

WEEKDAY OPERATION

1  C→A
2  B→B
3  B→B
4  A→A
5  B→A

HOLIDAY OPERATION

6  A→B
7  B→B

ALLOCATION RESULT

| PLACE | | 4/1(WEEKDAY) | 4/2(HOLIDAY) |
|---|---|---|---|
| 01 VEHICLE | B | 2 B→B  CLEANING  5 B→A | INSPECTION |
| 02 VEHICLE | C | 1 C→A  INSPECTION  4 A→A | 6 A→B |
| 03 VEHICLE | B | 3 B→B | 7 B→B |

EP 3 792 844 A1

FIG. 12

4/1(WEEKDAY)   4/2(HOLIDAY)

CLEANING   INSPECTION

INSPECTION

INSPECTION   INSPECTION (PERFORMED IN A)
CLEANING   CLEANING (PERFORMED IN B)

WEEKDAY OPERATION   HOLIDAY OPERATION

| 1 C→A | 4 A→A | 6 A → B |
| 2 B→B | 5 B→A | 7 B → B |
| 3 B →B | | |

ALLOCATION RESULT

| PLACE | 4/1(WEEKDAY) | 4/2(HOLIDAY) |
|---|---|---|
| 01 VEHICLE B | 2 B→B CLEANING 5 B→A | INSPECTION |
| 02 VEHICLE C | 1 C→A 4 A→A | 6 A → B |
| 03 VEHICLE B | INSPECTION | 7 B → B |

HOLIDAY OPERATION

3 B →B

START

CREATE RESTRICTION CONDITION BASED ON CAPACITY INVEHICLE, CYCLE INVEHICLE, HIGH-RANKED TASK INVEHICLE, AND PLANNED TASK INVEHICLE ⌇S11

CREATE PROVISIONAL TASK SCHEDULE BY OPTIMIZING OR QUASI-OPTIMIZING OBJECTIVE FUNCTION UNDER RESTRICTION CONDITION ⌇S12

ALLOCATE PLURALITY OF OPERATIONS TO VEHICLE S UNDER PROVISIONAL TASK SCHEDULE ⌇S13

S14
ALL OPERATIONS CAN BE ALLOCATED?  YES

NO

SPECIFY PAIR OF DATE AND VEHICLE TO WHICH OPERATIONS ARE NOT SUCCESSFULLY ALLOCATED BECAUSE TASK IS ALLOCATED AND ADD PAIR TO TabuList ⌇S15

S16
PREDETERMINED NUMBER OF TIMES OR LESS?

YES

NO

END

END

FIG. 13

| DATE | 4/1 | 4/2 | 4/3 | 4/4 | 4/5 | 4/6 | 4/7 | 4/8 | 4/9 | 4/10 | 4/11 | 4/12 |
|---|---|---|---|---|---|---|---|---|---|---|---|---|
| CAPACITY OF MAJOR CLEANING | 1 | 0 | 0 | 1 | 1 | 1 | 1 | 1 | 0 | 0 | 1 | 1 |
| CAPACITY OF MINOR CLEANING | 1 | 0 | 0 | 1 | 1 | 1 | 1 | 1 | 0 | 0 | 1 | 1 |

FIG. 14

| VEHICLE ID | TARGET CYCLE | LAST IMPLEMENTATION DAY |
|---|---|---|
| 01 | FIVE DAYS | 3/28(MINOR CLEANING) |
| 02 | FIVE DAYS | 3/29(MAJOR CLEANING) |
| 03 | FIVE DAYS | 3/31(MINOR CLEANING) |
| 04 | FIVE DAYS | 3/31(MAJOR CLEANING) |
| 05 | FIVE DAYS | 3/28(MINOR CLEANING) |

FIG. 15

| DATE | | | 4/1 | 4/2 | 4/3 | 4/4 | 4/5 | 4/6 | 4/7 | 4/8 | 4/9 | 4/10 | 4/11 | 4/12 |
|---|---|---|---|---|---|---|---|---|---|---|---|---|---|---|
| CAPACITY (MAJOR CLEANING, MINOR CLEANING) | | | (1,1) | (0,0) | (0,0) | (1,1) | (1,1) | (1,1) | (1,1) | (1,1) | (0,0) | (0,0) | (1,1) | (1,1) |
| VEHICLE 01 | TARGET CYCLE: FIVE DAYS | LAST IMPLEMENTATION DAY: 3/28(MINOR CLEANING) | | | | | | | | | | | | |
| VEHICLE 02 | TARGET CYCLE: FIVE DAYS | LAST IMPLEMENTATION DAY: 3/31(MINOR CLEANING) | | | | | | | | | | | | |
| VEHICLE 03 | TARGET CYCLE: FIVE DAYS | LAST IMPLEMENTATION DAY: 3/31(MINOR CLEANING) | | | | | | | | | | | | |
| VEHICLE 04 | TARGET CYCLE: FIVE DAYS | LAST IMPLEMENTATION DAY: 3/31(MAJOR CLEANING) | | | | | | | | | | | | |
| VEHICLE 05 | TARGET CYCLE: FIVE DAYS | LAST IMPLEMENTATION DAY: 3/28(MINOR CLEANING) | | | | | | | | | | | | |

FIG. 16

EP 3 792 844 A1

| DATE | | | 4/1 | 4/2 | 4/3 | 4/4 | 4/5 | 4/6 | 4/7 | 4/8 | 4/9 | 4/10 | 4/11 | 4/12 |
|---|---|---|---|---|---|---|---|---|---|---|---|---|---|---|
| CAPACITY (MAJOR CLEANING, MINOR CLEANING) | | | (1,1) | (0,0) | (0,0) | (1,1) | (1,1) | (1,1) | (1,1) | (1,1) | (0,0) | (0,0) | (1,1) | (1,1) |
| VEHICLE 01 | TARGET CYCLE: FIVE DAYS | LAST IMPLEMENTATION DAY: 3/28(MINOR CLEANING) | | | | MINOR | | | | MAJOR | | | | |
| VEHICLE 02 | TARGET CYCLE: FIVE DAYS | LAST IMPLEMENTATION DAY: 3/31(MINOR CLEANING) | | | | | | MAJOR | | | | | MINOR | |
| VEHICLE 03 | TARGET CYCLE: FIVE DAYS | LAST IMPLEMENTATION DAY: 3/31(MINOR CLEANING) | | | | | MAJOR | | | | | | MINOR | |
| VEHICLE 04 | TARGET CYCLE: FIVE DAYS | LAST IMPLEMENTATION DAY: 3/31(MAJOR CLEANING) | | | | | | MINOR | | | | | | MAJOR |
| VEHICLE 05 | TARGET CYCLE: FIVE DAYS | LAST IMPLEMENTATION DAY: 3/28(MINOR CLEANING) | MAJOR | | | | | | MINOR | | | | | |

## FIG. 17

FIG. 18

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/318002 A1 (TOMIYAMA TOMOE [JP] ET AL) 28 November 2013 (2013-11-28) * figure 1 * ----- | 1-19 | INV. G06Q10/00 G06Q50/30 G06Q10/06 |
| X | EP 3 086 268 A1 (HITACHI LTD [JP]) 26 October 2016 (2016-10-26) * figure 1 * ----- | 1-19 | |

TECHNICAL FIELDS
SEARCHED      (IPC)

G06Q

The present search report has been drawn up for all claims

| Place of search | Date of completion of the search | Examiner |
|---|---|---|
| Munich | 9 April 2020 | Heselius, Per |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 2068

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | | Publication date | Patent family member(s) | | Publication date |
|---|---|---|---|---|---|
| US 2013318002 | A1 | 28-11-2013 | GB | 2501650 A | 30-10-2013 |
| | | | JP | 5618857 B2 | 05-11-2014 |
| | | | JP | 2012168739 A | 06-09-2012 |
| | | | US | 2013318002 A1 | 28-11-2013 |
| | | | WO | 2012111217 A1 | 23-08-2012 |
| EP 3086268 | A1 | 26-10-2016 | EP | 3086268 A1 | 26-10-2016 |
| | | | JP | 6571376 B2 | 04-09-2019 |
| | | | JP | 2016203873 A | 08-12-2016 |

EPO FORM P0459

For more details about this annex : see Official Journal of the European Patent Office, No. 12/82

**EP 3 792 844 A1**